# EUROPEAN PATENT APPLICATION

(11) **EP 4 704 232 A1**
(43) Date of publication of application: **04.03.2026**
(21) Application number: 24198304.8
(22) Date of filing: 03.09.2024
(51) Int. Cl.: H01M 50/211, H01M 50/291, H01M 50/503

(54) **BUSBAR WITH THERMAL BARRIER ALIGNMENT GUIDES**

(71) Applicant: Ford Global Technologies, LLC, Dearborn, MI 48126 (US)
(72) Inventor: LECK, Chris, Enfield, EN2 7EJ (GB); MACWILLSON, Hamish, Colchester, CO6 2PP (GB); THOMAS, Ronnie, South Woodham Ferrers, CM3 5XZ (GB)
(74) Representative: HG Law International LLP

(57) **Abstract**

The present disclosure provides a busbar for a battery pack having a plurality of battery cells separated by respective thermal barriers. The busbar is configured to provide electrical connection between battery cells within the battery pack by way of electrical connection arrangements. The busbar further comprises a plurality of channels, each channel configured to receive a thermal barrier. Each channel includes a first portion sized to accommodate a thermal barrier and a second portion adjacent an opening of the channel which is wider than the first portion of the channel such that, during assembly of the busbar into a battery pack, the second portion of each channel is configured to guide a thermal barrier into the respective channel.

## Description

### FIELD OF INVENTION

The present disclosure relates to battery packs for electric vehicles, and more particularly to a busbar and isolation cover with thermal barrier alignment guides for enhanced ease and reliability of assembly and thermal management of battery packs.

### BACKGROUND

Battery packs are widely used as power sources in various applications, including electric vehicles, portable electronic devices, and large-scale energy storage systems. These battery packs typically consist of multiple individual battery cells electrically interconnected to provide the desired voltage and current output. The arrangement and interconnection of these cells within the battery pack play a role in the performance of the battery pack.

In a typical battery pack configuration, an outer shell houses the battery cells or cell groups, which are often separated by thermal barriers. Busbars provide electrical interconnection between the cells or cell groups and present terminals for external connections. Isolation covers are used to complete the outer shell of the battery pack and insulate the electrical connections.

Thermal management is a consideration in battery pack design and assembly, as the operation of battery cells generates heat. To address this, thermal propagation suppression devices, such as thermal barriers, are often incorporated within the inter-cell spaces. These thermal barriers help manage heat and/or thermal issues within the battery pack, potentially enhancing overall performance and longevity.

The assembly process of battery packs involves both electrical interconnection and mechanical linkage of the cells. This process typically includes securing the cells in place, connecting them to busbars or other conductive elements, and integrating thermal management components. The alignment and interlocking of thermal barriers with busbars and isolation covers are important aspects of this assembly process, as they contribute to the formation of isolated chambers for individual cells or cell groups within the battery pack.

However, the assembly of battery packs, particularly the alignment and integration of multiple components such as cells, thermal barriers, busbars, and isolation covers, can be challenging. For example, variations in component tolerances and the need for precise positioning can make the assembly process time-consuming and labor-intensive, particularly when manually aligning multiple thermal barriers with their corresponding channels.

As the demand for high-performance and reliable battery packs continues to grow, particularly in the electric vehicle industry, there is an ongoing need for designs and assembly methods that can enhance manufacturing efficiency, ensure proper component alignment, and maintain the integrity of the battery pack's thermal management and electrical systems.

There are several technical challenges associated with the assembly and thermal management of battery packs. One challenge is accurately aligning and location thermal barriers within the channels of busbars and isolation covers during assembly. There is therefore a need for designs that can enhance the efficiency of battery pack assembly while ensuring proper thermal management.

### SUMMARY OF INVENTION

According to an aspect of the present disclosure, a busbar for a battery pack having a plurality of battery cells separated by respective thermal barriers is provided. The busbar is configured to provide electrical connection between battery cells within the battery pack by way of electrical connection arrangements. The busbar further comprises a plurality of channels, each channel configured to receive a thermal barrier. Each channel includes a first portion sized to accommodate a thermal barrier and a second portion adjacent an opening of the channel which is wider than the first portion of the channel such that, during assembly of the busbar into a battery pack, the second portion of each channel is configured to guide a thermal barrier into the respective channel.

According to other aspects of the present disclosure, the busbar may include one or more of the following features. The second portion may widen progressively with respect to the first portion. The second portion may be flared with respect to the first portion. The first and second portions of each channel may include sidewalls, the sidewalls of the second portion being flared with respect to the first portion. The busbar may comprise a body portion and a plurality of fingers extending away therefrom, and the channels may be provided on the fingers. Respective fingers may define openings therebetween, such that when the busbar is assembled into a battery pack, additional thermal barriers may pass through the openings between respective fingers of the busbar. The openings may be u-shaped. When the busbar is assembled into a battery pack, ends of thermal barriers may enter respective channels in a direction substantially perpendicular to the major surface of the busbar. The busbar may be slid onto ends of the thermal barriers. The busbar may be affixed to, and hinged to enable movement with respect to the battery pack.

According to another aspect of the present disclosure, an isolation cover for a battery pack having a plurality of battery cells separated by respective thermal barriers is provided. The isolation cover is formed of an insulating material and is configured to insulate the battery cells within the battery pack and connections provided by a busbar. The isolation cover further comprises a plurality of channels, each channel configured to receive a thermal barrier. Each channel includes a first portion sized to accommodate a thermal barrier and a second portion adjacent an opening of the channel which is wider than the first portion of the channel such that, during assembly of the isolation cover into a battery pack, the second portion of each channel is configured to guide a thermal barrier into the respective channel.

According to other aspects of the present disclosure, the isolation cover may include one or more of the following features. The second portion may widen progressively with respect to the first portion. The second portion may be flared with respect to the first portion. The first and second portions of each channel may include sidewalls, the sidewalls of the second portion being flared with respect to the first portion.

According to yet another aspect of the present disclosure, a battery pack is provided. The battery pack comprises at least one thermal barrier, the busbar of the first aspect, and the isolation cover of the second aspect.

According to yet another aspect of the present disclosure, a vehicle is provided. The vehicle comprises a battery pack as described herein.

The busbar and isolation cover with thermal barrier alignment guides of the present disclosure offer several technical advantages over conventional designs. The incorporation of flared guide profiles in the channels of both the busbar and isolation cover enhances the efficiency and reliability of battery pack assembly. These flared guide profiles, represented by the second portions of the channels, serve as self-aligning mechanisms for the thermal barriers during assembly. This design feature enhances the alignment or proper location of thermal barriers, which has been a persistent challenge in prior art battery pack assemblies.

The progressive widening or flaring of the second portion of each channel creates a funnel-like opening that helps guide the thermal barriers into their correct positions. This self-aligning feature minimizes the need for manual intervention during assembly, thereby reducing assembly time. Furthermore, it decreases potential for difficulties which may occur during forced insertion of misaligned thermal barriers. By ensuring proper alignment and location of thermal barriers, this design enhances the overall thermal management capabilities of the battery pack, potentially leading to better performance and longevity of the battery system.

The versatility of the design allows for its application in various assembly methods, including top-down assembly for busbars and end-on insertion for isolation covers. This flexibility makes the design adaptable to different manufacturing processes and battery pack configurations. Additionally, the better alignment and location of thermal barriers contribute to the formation of more effective isolated chambers within the battery pack, enhancing thermal propagation suppression and overall performance of the battery system.

### BRIEF DESCRIPTION OF FIGURES

Aspects of this disclosure will be best understood from the following description of specific embodiments when read in connection with the accompanying drawings.
FIG. 1 illustrates a perspective view of a portion of a busbar for a battery pack, according to aspects of the present disclosure.
FIG. 2 illustrates another perspective view of a portion of a busbar for a battery pack, according to aspects of the present disclosure.
FIG. 3 illustrates a section view of a battery pack assembly, according to aspects of the present disclosure.
FIG. 4 illustrates a perspective view of an isolation cover for a battery pack, according to aspects of the present disclosure.
FIG. 5 illustrates a perspective view of a portion of a busbar for a battery pack, according to aspects of the present disclosure.
FIG. 6 illustrates a perspective view of a portion of a busbar assembly for a battery pack, according to aspects of the present disclosure.
FIG. 7 illustrates a perspective view of a portion of an isolation cover for a battery pack, according to aspects of the present disclosure.
FIG. 8 illustrates another perspective view of a portion of an isolation cover for a battery pack, according to aspects of the present disclosure.
FIG. 9 illustrates a section view of a battery pack assembly, according to aspects of the present disclosure.
FIG. 10 illustrates a side view of a portion of a battery pack assembly, according to aspects of the present disclosure.
FIG. 11 illustrates another side view of a portion of a battery pack assembly, according to aspects of the present disclosure.
FIG. 12 illustrates a perspective view of a portion of a battery pack assembly, according to aspects of the present disclosure.
FIG. 13 illustrates a vehicle including a battery pack, according to aspects of the present disclosure.

### DETAILED DESCRIPTION

The present disclosure provides a busbar and an isolation cover, each designed with thermal barrier alignment guides, for use in battery packs. These components are particularly beneficial in the assembly of battery packs, where they aid in the accurate alignment and location of thermal barriers within their respective channels. The busbar and isolation cover, each featuring a plurality of channels with a flared guide profile, are configured to guide the thermal barriers into their correct positions during assembly. This design feature not only enhances the efficiency and reliability of the assembly process but also contributes to the effective thermal management within the battery pack. By ensuring proper alignment and location of thermal barriers, the busbar and isolation cover may help to enhance the overall performance and longevity of the battery system.

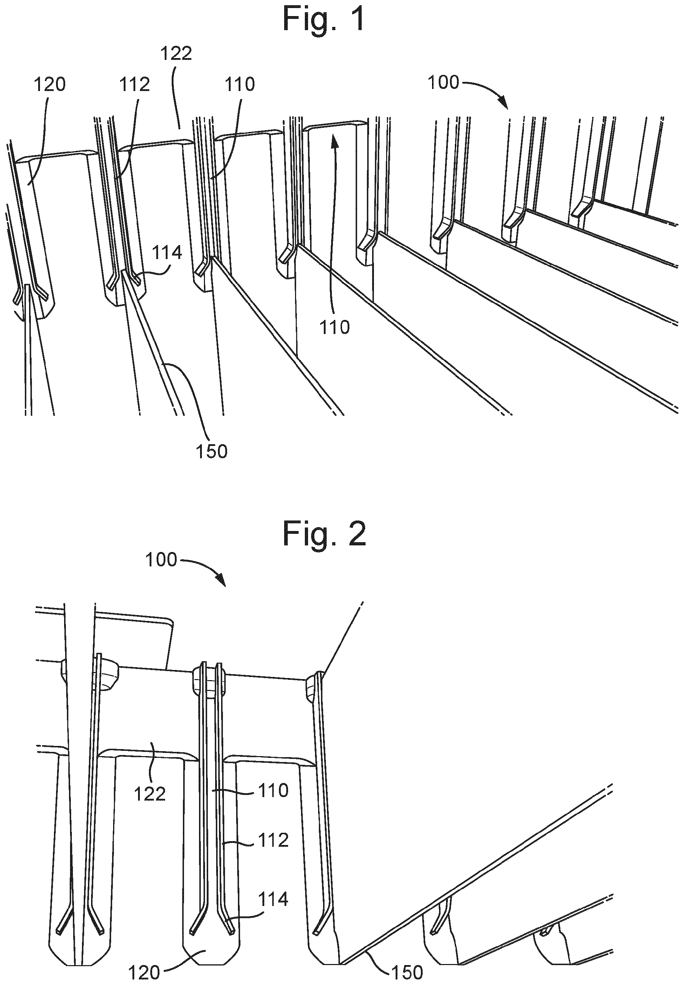

Referring to FIG. 1, a perspective view of a portion of a busbar 100 for a battery pack is illustrated. The busbar 100 comprises a body portion 122 from which multiple busbar fingers 120 extend vertically. Each busbar finger 120 features a channel 110 designed to accommodate a thermal barrier 150. The channels 110 in each busbar finger 120 comprise a first portion 112 and a second portion 114. The first portion 112 is the narrower upper section of the channel 110, while the second portion 114 is the wider lower section. At the bottom of each channel 110, the second portion 114 flares outward, creating a funnel-like opening. The second portion 114 of the channel 110 is the first point at which the thermal barrier 150 comes into contact when the busbar 100 is affixed to a battery pack. It can therefore be said that the second portion 114 is at the leading edge of the channel 110. For the avoidance of doubt, any reference to terms, such as "vertical", "upper", "lower", etc., are merely in relation to the orientation of the busbar shown in the figures and these terms should not be understood to limit the scope of the disclosure.

The perspective view reveals the depth and shape of the channels 110, showing how the first portion 112 transitions into the wider second portion 114. The spaces between the busbar fingers 120 allow for additional thermal barriers to pass through when the busbar 100 is assembled into a battery pack. These openings between the busbar fingers 120 may be U-shaped, V-shaped, or any other suitable shape. In some embodiments, the busbar 100 may not include any openings and may be a solid structure.

The thermal barriers 150 are shown partially inserted into the channels 110, demonstrating how they fit within the first portion 112 of each channel. The widened second portion 114 of each channel 110 provides a mechanism for guiding the thermal barriers 150 during assembly. This design feature not only enhances the efficiency and reliability of the assembly process but also contributes to the effective thermal management within the battery pack.

In some embodiments, a battery pack may comprise the busbar 100 with channels 110 to receive thermal barriers 150, where each channel 110 has a first portion 112 sized to accommodate a thermal barrier 150 and a second wider portion 114 adjacent the opening to guide the thermal barrier 150 into the channel 110. This configuration allows for alignment and insertion of the thermal barrier 150 into the busbar 100 within the context of the battery pack.

Referring to FIG. 2, a perspective view of a portion of a busbar 100 for a battery pack is depicted. The busbar 100 includes a body portion 122 from which multiple busbar fingers 120 extend. Each busbar finger 120 features a channel 110 designed to accommodate a thermal barrier 150. The channels 110 in each busbar finger 120 comprise a first portion 112 and a second portion 114. The first portion 112 is the narrower upper section of the channel 110, while the second portion 114 is the wider lower section. At the bottom of each channel 110, the second portion 114 flares outward, creating a funnel-like opening. The second portion 114 of the channel 110 is the first point at which the thermal barrier 150 comes into contact when the busbar 100 is affixed to a battery pack. It can therefore be said that the second portion 114 is at the leading edge of the channel 110.

In some cases, the busbar 100 may include U-shaped openings defined by fingers 120, to allow thermal barriers 150 to pass therethrough. These openings between the busbar fingers 120 may be U-shaped, V-shaped, or any other suitable shape. In some embodiments, the busbar 100 may not include any openings and may be a solid structure. The U-shaped openings allow for additional thermal barriers 150 to pass through when the busbar 100 is assembled into a battery pack. This configuration can facilitate the assembly process and enhance the thermal management within the battery pack.

The flared shape of the second portion 114 of the channel 110 serves to guide the thermal barrier 150 during assembly. This configuration allows for easier alignment and insertion of the thermal barrier 150 into the busbar 100. The flared second portion 114 of the channel 110 provides a larger target area for initial alignment of thermal barriers 150 during the assembly process, thereby enhancing the efficiency and reliability of the assembly process.

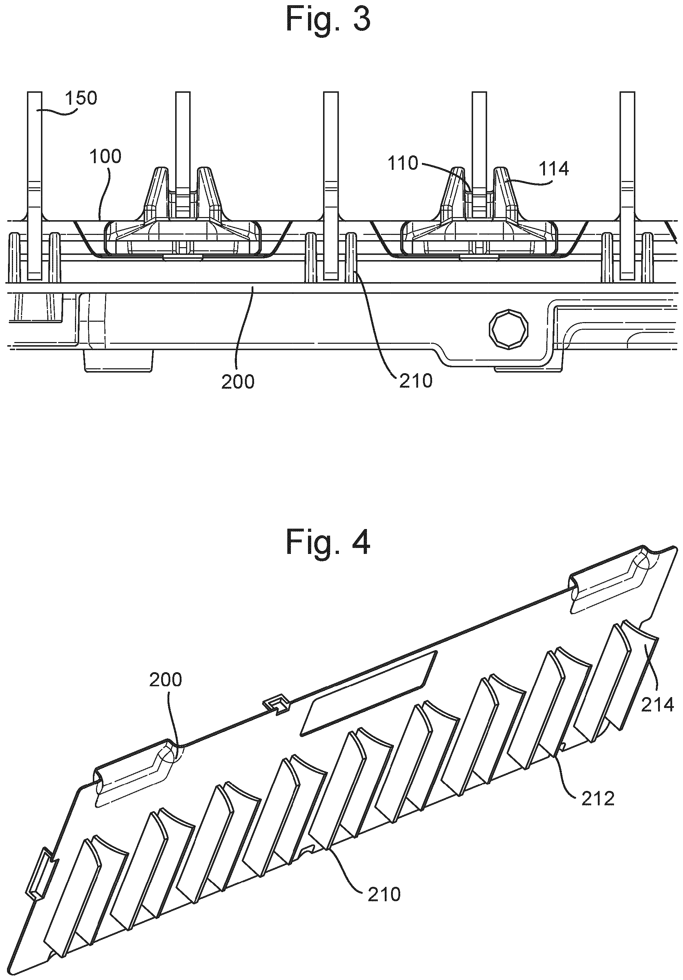

Referring to FIG. 3, a section view of a battery pack assembly is illustrated, showing the interaction between a busbar 100, thermal barriers 150, and an isolation cover 200. The busbar 100 includes multiple channels 110 along its length. These channels 110 are shaped so as to accommodate the thermal barriers 150. Each channel 110 includes a second portion 114 that flares outward, creating a funnel-like opening at the top of the channel 110.

The thermal barriers 150 are shown as vertical elements extending upward and away from the busbar 100. They are inserted into the channels 110 of the busbar 100, with their ends fitting into the flared channels 110.

Below the busbar 100, the isolation cover 200 is shown. The isolation cover 200 includes channels 210 that align with and accommodate the lower ends of the thermal barriers 150. The isolation cover 200 is formed of an insulating material and is configured to insulate the battery cells within the battery pack and connections provided by the busbar 100.

The section view shows the assembly, and in particular shows how the thermal barriers 150 interact with both the busbar 100 and the isolation cover 200. This arrangement facilitates thermal management and electrical insulation within the battery pack. The thermal barriers 150 which are in contact with the isolation cover 200 pass through openings in the busbar 100 as described above and in connection with FIG. 1.

The flared second portions 114 of the channels 110 in the busbar 100 provide a mechanism for guiding the thermal barriers 150 during assembly. This may allow for insertion and alignment of the thermal barriers 150 within the battery pack structure. The flared shape of the second portion 114 serves to guide the thermal barrier 150 into the channel 110. The flared shape may be defined as funnel-shaped, but is not a funnel.

In some aspects, the isolation cover 200 may be formed of a heat-resistant material. The heat-resistant material may be selected based on its ability to withstand high temperatures without degrading or losing its insulating properties. This may enhance the thermal management capabilities of the battery pack system, potentially enhancing its performance and lifespan.

Referring to FIG. 4, a perspective view of an isolation cover 200 for a battery pack is illustrated. The isolation cover 200 is an elongated structure with multiple channels 210 arranged along its length. These channels 210 are designed to accommodate thermal barriers within a battery pack assembly.

Each channel 210 comprises two distinct portions: a first portion 212 and a second portion 214. The first portion 212 is represented by the narrower section of the channel 210, while the second portion 214 is the wider section at the opening of the channel 210. The second portion 214 flares outward, creating a funnel-like shape at the entrance of each channel 210. It can be said that the second portion 214 of the channel 210 is the first point at which the thermal barrier comes into contact when the isolation cover 200 is affixed to a battery pack. It can therefore be said that the second portion 214 forms the leading edge of the channel 210.

The channels 210 are positioned at regular intervals along the length of the isolation cover 200. The flared shape of the second portion 214 of each channel 210 serves to guide thermal barriers during assembly, facilitating their insertion into the channels 210. This may not only enhances the efficiency and reliability of the assembly process but may also contribute to the effective thermal management within the battery pack.

In some aspects, the isolation cover 200 may be formed of a heat-resistant material. The heat-resistant material may be selected based on its ability to withstand high temperatures without degrading or losing its insulating properties. This may enhance the thermal management capabilities of the battery pack system, potentially enhancing its performance and lifespan.

In some cases, the isolation cover 200 may be slid onto ends of the thermal barriers in a direction substantially perpendicular to the major surface of the isolation cover 200. This configuration allows for alignment and insertion of the thermal barrier into the isolation cover 200 within the context of the battery pack. The flared second portion 214 of the channel 210 provides a larger target area for initial alignment of thermal barriers during the assembly process, thereby enhancing the efficiency and reliability of the assembly process.

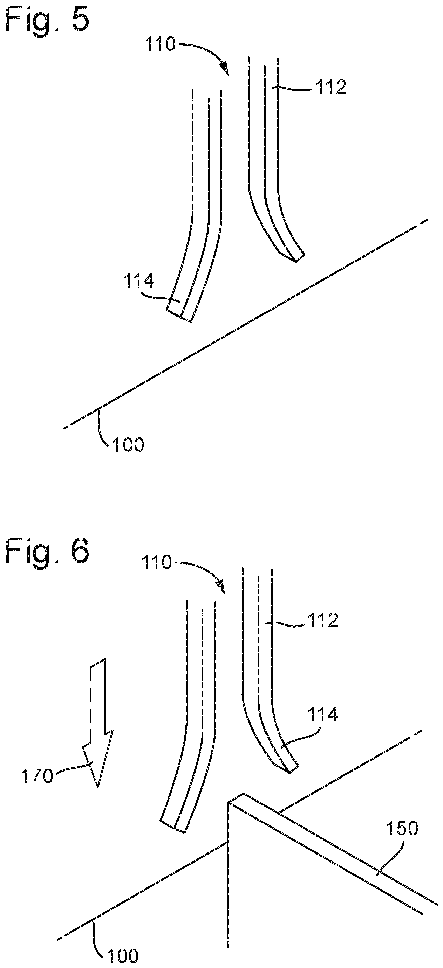

Referring to FIG. 5, a perspective view of a portion of a busbar 100 for a battery pack is illustrated. The busbar 100 features multiple channels 110 extending vertically from its surface. Each channel 110 comprises two distinct portions: a first portion 112 and a second portion 114. The first portion 112 is represented as the upper, narrower section of the channel 110. This portion maintains a substantially consistent width along its length. The second portion 114 is shown as the lower section of each channel 110. This portion widens progressively towards the base of the channel, creating a flared or funnel-like opening. The second portion 114 of the channel 110 is the first point at which the thermal barrier 150 comes into contact when the busbar 100 is affixed to a battery pack. It can therefore be said that the second portion 114 is at the leading edge of the channel 110.

The perspective view shows the depth and shape of the channels 110, and in particular demonstrates how the first portion 112 transitions into the wider second portion 114.

The channels 110 are arranged in parallel along the length of the busbar 100, with spaces between them to accommodate additional components in the battery pack assembly.

The configuration of the busbar 100 with channels 110 incorporates features to facilitate the insertion and alignment of other elements within the battery pack structure. The flared second portion 114 of each channel 110 provides a larger target area for initial alignment of thermal barriers 150 during the assembly process, thereby enhancing the efficiency and reliability of the assembly process.

In some aspects, the busbar 100 may be slid onto ends of the thermal barriers 150 in a direction substantially perpendicular to the major surface of the busbar 100. This configuration allows for alignment and insertion of the thermal barrier 150 into the busbar 100 within the context of the battery pack. The flared second portion 114 of the channel 110 provides a larger target area for initial alignment of thermal barriers 150 during the assembly process, thereby enhancing the efficiency and reliability of the assembly process.

Referring to FIG. 6, a perspective view of a portion of a busbar assembly for a battery pack is illustrated. The busbar 100 is depicted as a horizontal structure at the bottom of the image. The busbar 100 includes a channel 110 designed to accommodate a thermal barrier 150.

The channel 110 comprises two distinct portions: a first portion 112 and a second portion 114. The first portion 112 is represented as the upper, narrower section of the channel 110. The second portion 114 is shown as the lower, wider section of the channel 110, which flares outward to create a funnel-like opening. As described in connection with FIG. 1, it can be said that the second portion 114 of the channel 110 is the first point at which the thermal barrier 150 comes into contact when the busbar 100 is affixed to a battery pack. It can therefore be said that the second portion 114 is at the leading edge of the channel 110.

A thermal barrier 150 is illustrated as an elongated element positioned below the busbar 100. The thermal barrier 150 is oriented to align with the channel 110 in the busbar 100. The dashed lines show the thermal barrier 150 within the battery pack assembly.

To the left of the main assembly, a guide arrow 170 is depicted. This arrow denotes the direction for moving the busbar 100 toward the thermal barrier 150 such that it becomes inserted into and received by the channel 110 of the busbar 100.

The flared shape of the second portion 114 of the channel 110 serves to guide the thermal barrier 150 during assembly. This configuration allows for easier alignment and insertion of the thermal barrier 150 into the busbar 100. The flared second portion 114 of the channel 110 provides a larger target area for initial alignment of thermal barriers 150 during the assembly process, thereby enhancing the efficiency and reliability of the assembly process.

In some aspects, the busbar 100 may be slid onto ends of the thermal barriers 150 in a direction substantially perpendicular to the major surface of the busbar 100. This configuration allows for alignment and insertion of the thermal barrier 150 into the busbar 100 within the context of the battery pack. The flared second portion 114 of the channel 110 provides a larger target area for initial alignment of thermal barriers 150 during the assembly process, thereby enhancing the efficiency and reliability of the assembly process.

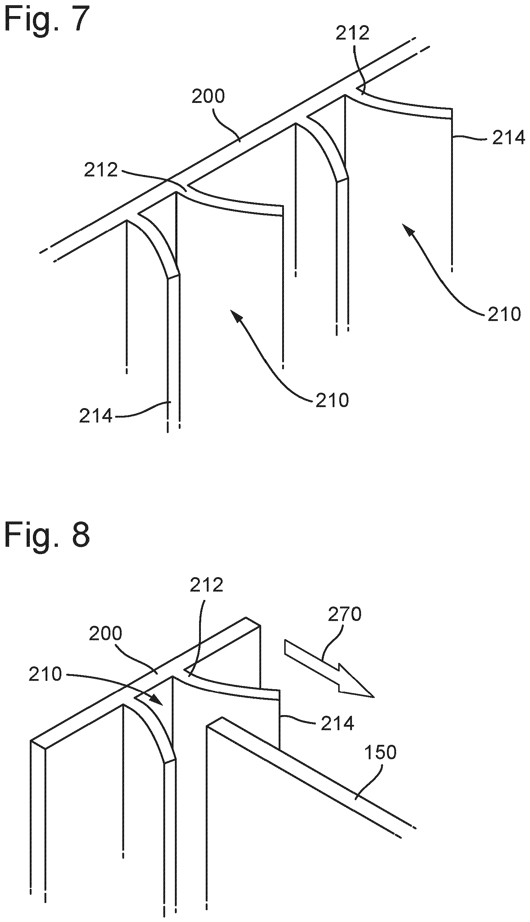

Referring to FIG. 7, a perspective view of a portion of an isolation cover 200 for a battery pack is illustrated. The isolation cover 200 is an elongated structure with multiple channels 210 arranged along its length. These channels 210 are designed to accommodate thermal barriers within a battery pack assembly.

Each channel 210 comprises two distinct portions: a first portion 212 and a second portion 214. The first portion 212 is represented by the narrower section of the channel 210, while the second portion 214 is the wider section at the opening of the channel 210. The second portion 214 flares outward, creating a funnel-like shape at the entrance of each channel 210. It can be said that the second portion 214 of the channel 210 is the first point at which the thermal barrier comes into contact when the isolation cover 200 is affixed to a battery pack. It can therefore be said that the second portion 214 forms the leading edge of the channel 210.

The channels 210 are positioned at regular intervals along the length of the isolation cover 200. The flared shape of the second portion 214 of each channel 210 serves to guide thermal barriers during assembly, facilitating their insertion into the channels 210. This may not only enhances the efficiency and reliability of the assembly process but also may also contribute to the effective thermal management within the battery pack.

In some aspects, the isolation cover 200 may be formed of a heat-resistant material. The heat-resistant material may be selected based on its ability to withstand high temperatures without degrading or losing its insulating properties. This may enhance the thermal management capabilities of the battery pack system, potentially enhancing its performance and lifespan.

In some cases, the isolation cover 200 may be slid onto ends of the thermal barriers in a direction substantially perpendicular to the major surface of the isolation cover 200. This configuration allows for alignment and insertion of the thermal barrier into the isolation cover 200 within the context of the battery pack. The flared second portion 214 of the channel 210 provides a larger target area for initial alignment of thermal barriers during the assembly process, thereby enhancing the efficiency and reliability of the assembly process.

Referring to FIG. 8 a perspective view of a portion of an isolation cover 200 for a battery pack is illustrated. The figure shows a portion of an isolation cover 200 with a channel 210 designed to accommodate a thermal barrier 150. The channel 210 includes a first portion 212 and a second portion 214. The first portion 212 is the narrower section of the channel 210, while the second portion 214 is wider and flares outward, creating a funnel-like shape at the opening of the channel 210. As described in connection with FIG. 7, it can be said that the second portion 214 of the channel 210 is the first point at which the thermal barrier comes into contact when the isolation cover 200 is affixed to a battery pack 190. It can therefore be said that the second portion 214 forms the leading edge of the channel 210.

A thermal barrier 150 is illustrated as an elongated element positioned adjacent the isolation cover 200 and protruding from within the battery pack assembly 190. The thermal barrier 150 is oriented to align with the channel 210 in the isolation cover 200. The dashed lines show the thermal barrier 150 within the battery pack assembly 190.

An arrow denoting an assembly direction 270 is depicted. This arrow points horizontally to the right, showing the direction in which the isolation cover 200 is intended to be inserted or assembled into the battery pack 190. This direction may be taken as the Y direction with respect to a vehicle in which the battery pack 190 may be installed. This is the direction that the isolation cover 200 may be slid with respect to the battery pack assembly 190 to unite the busbar 100 and the battery pack assembly 190. The assembly of the busbar 100 into the battery pack assembly 190 is such that the thermal barrier 150 is inserted into and received by the channel 110 of the busbar 100.

The configuration of the isolation cover 200 with the channel 210 and the positioning of the thermal barrier 150 demonstrate the structural arrangement of components within the battery pack assembly. The assembly direction 270 may indicate that the isolation cover 200 is designed to be slid horizontally into position, perpendicular to the orientation of the thermal barrier 150. This configuration allows for alignment and insertion of the thermal barrier 150 into the isolation cover 200 within the context of the battery pack 190. The flared second portion 214 of the channel 210 provides a larger target area for initial alignment of thermal barriers 150 during the assembly process, thereby enhancing the efficiency and reliability of the assembly process.

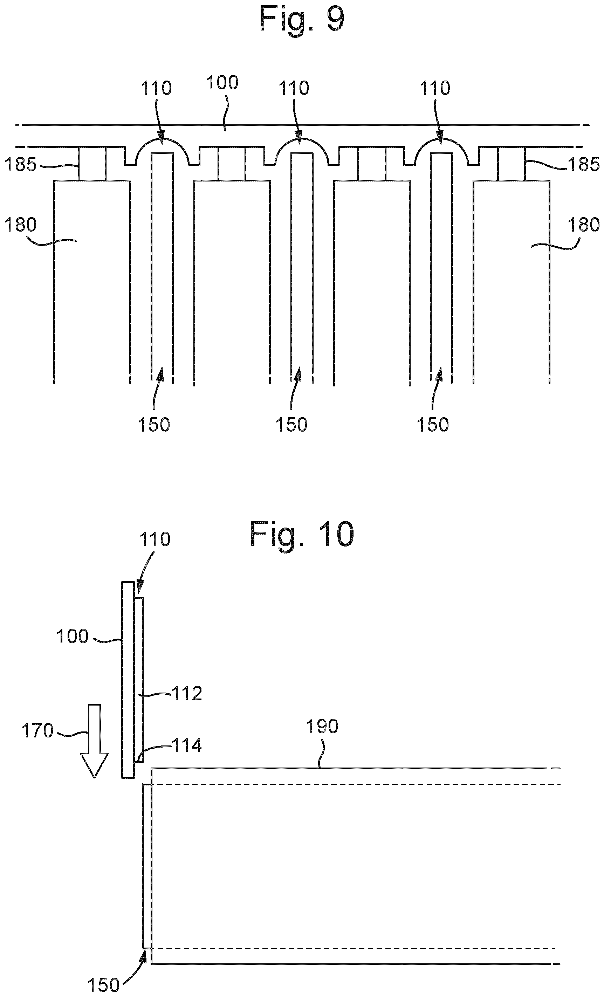

Referring to FIG. 9, a section view of a battery pack assembly is illustrated, showing the interaction between a busbar 100, thermal barriers 150, battery cells 180, and connection arrangements 185. The busbar 100 is represented as a horizontal structure with multiple channels 110 along its length. These channels 110 are shaped so as to accommodate the thermal barriers 150. Each channel 110 includes a second portion 114 that flares outward, creating a funnel-like opening at the top of the channel 110.

The thermal barriers 150 are shown as vertical elements extending downward from the busbar 100. They are inserted into the channels 110 of the busbar 100, with their upper ends fitting into the channels 110. The thermal barriers 150 extend between the battery cells 180, providing separation between adjacent cells.

The battery cells 180 are represented as large rectangular structures positioned below the busbar 100 and separated by the thermal barriers 150. The cells 180 are arranged in a side-by-side configuration, with the thermal barriers 150 positioned between them. Each of the battery cells 180 may include a single cell or multiple cells.

Connection arrangements 185 are visible at the top of the battery cells 180, just below the busbar 100. These connection arrangements 185 are shown as protrusions or tabs extending from the tops of the battery cells 180, which serve as electrical connection points between the cells 180 and the busbar 100.

The section view reveals the internal structure of the assembly, demonstrating how the thermal barriers 150 connect the busbar 100 to the battery cells 180. This arrangement facilitates thermal management and electrical connections within the battery pack. The flared second portions 114 of the channels 110 in the busbar 100 provide a mechanism for guiding the thermal barriers 150 during assembly. This may allow for insertion and alignment of the thermal barriers 150 within the battery pack structure. The flared shape of the second portion 114 serves to guide the thermal barrier 150 into the channel 110. The flared shape may be defined as funnel-shaped, but is not a funnel.

In some aspects, a battery pack 190 may comprise at least two thermal barriers 150 as described herein, a busbar 100 as described herein, and an isolation cover 200 as described herein, along with one or more battery cells 180. The battery pack 190 may be configured to provide electrical connection between battery cells 180 within the battery pack 190 by way of electrical connection arrangements 185. The battery pack 190 may further comprise a plurality of channels 110, each channel 110 configured to receive a thermal barrier 150. Each channel 110 may include a first portion 112 sized to accommodate a thermal barrier 150 and a second portion 114 adjacent an opening of the channel 110 which is wider than the first portion 112 of the channel 110. During assembly of the busbar 100 into a battery pack 190, the second portion 114 of each channel 110 may be configured to guide a thermal barrier 150 into the respective channel 110.

Referring to FIG. 10, a side view of a portion of a battery pack assembly 190 is illustrated. The diagram shows a busbar 100 with a channel 110 designed to accommodate a thermal barrier 150. The channel 110 comprises two distinct portions: a first portion 112 and a second portion 114. The first portion 112 is represented as the upper, narrower section of the channel 110, while the second portion 114 is wider and flares outward, creating a funnel-like shape at the opening of the channel 110. The second portion 114 of the channel 110 is the first point at which the thermal barrier 150 comes into contact when the busbar 100 is affixed to a battery pack 190. It can therefore be said that the second portion 114 is at the leading edge of the channel 110.

A thermal barrier 150 is illustrated as an elongated element positioned below the busbar 100. The thermal barrier 150 is oriented to align with the channel 110 in the busbar 100. The dashed lines show the thermal barrier 150 within the battery pack assembly 190.

To the left of the battery pack assembly 190, an arrow 170 is shown, denoting the direction that the busbar 100 may be slid with respect to the battery pack assembly 190 to unite the busbar 100 and the battery pack assembly 190. The assembly of the busbar 100 into the battery pack assembly 190 is such that the thermal barrier 150 is inserted into and received by the channel 110 of the busbar 100. This direction may be described as the Z direction with respect to a vehicle in which the battery pack 190 may be installed.

The flared profile of the second portion 114 of the channel 110 serves to guide the thermal barrier 150 during assembly. This configuration allows for alignment and insertion of the thermal barrier 150 into the busbar 100 within the context of the battery pack 190. The flared second portion 114 of the channel 110 provides a larger target area for initial alignment of thermal barriers 150 during the assembly process, thereby enhancing the efficiency and reliability of the assembly process.

In some aspects, the busbar 100 may be slid onto ends of the thermal barriers 150 in a direction substantially perpendicular to the major surface of the busbar 100. This configuration allows for alignment and insertion of the thermal barrier 150 into the busbar 100 within the context of the battery pack. The flared second portion 114 of the channel 110 provides a larger target area for initial alignment of thermal barriers 150 during the assembly process, thereby enhancing the efficiency and reliability of the assembly process.

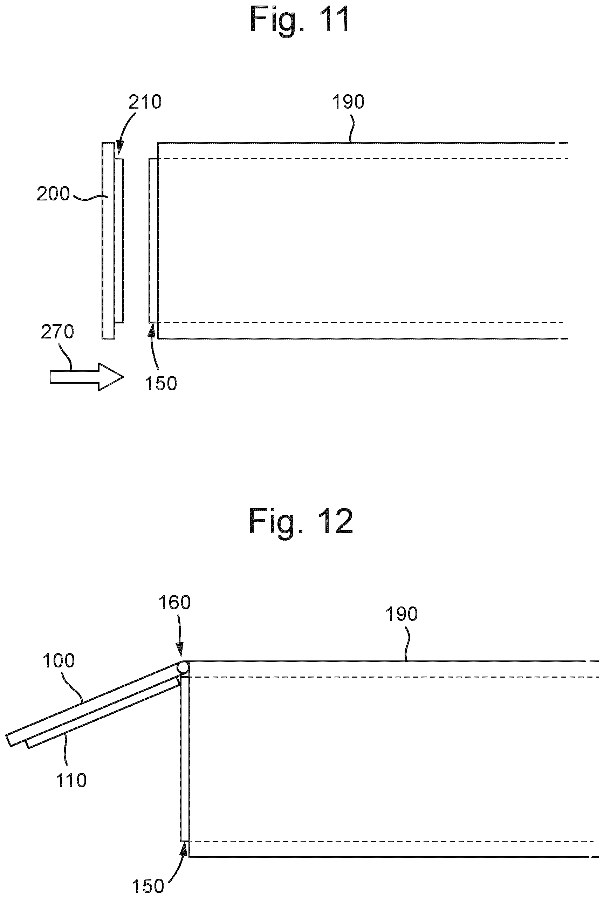

Referring to FIG. 11, a side view of a portion of a battery pack assembly 190 is illustrated. The figure shows an isolation cover 200 with a channel 210 designed to accommodate a thermal barrier 150. The channel 210 may include a first portion 212 and a second portion 214 as described herein, with the first portion 212 being the narrower section of the channel 210, while the second portion 214 is wider and flares outward, creating a funnel-like shape at the opening of the channel 210. As described in connection with FIG. 7, it can be said that the second portion 214 of the channel 210 is the first point at which the thermal barrier comes into contact when the isolation cover 200 is affixed to a battery pack 190. It can therefore be said that the second portion 214 forms the leading edge of the channel 210.

A thermal barrier 150 is illustrated as an elongated element positioned adjacent the isolation cover 200 and protruding from within the battery pack assembly 190. The thermal barrier 150 is oriented to align with the channel 210 in the isolation cover 200. The dashed lines show the thermal barrier 150 within the battery pack assembly 190.

An arrow denoting an assembly direction 270 is depicted. This arrow points horizontally to the right, and illustrates the direction in which the isolation cover 200 is intended to be inserted or assembled into the battery pack 190. This direction may be taken as the Y direction with respect to a vehicle in which the battery pack 190 may be installed. This is the direction that the isolation cover 200 may be slid with respect to the battery pack assembly 190 to unite the busbar 100 and the battery pack assembly 190. The assembly of the busbar 100 into the battery pack assembly 190 is such that the thermal barrier 150 is inserted into and received by the channel 210 of the isolation cover 200.

Referring to FIG. 12, a perspective view of a portion of a battery pack assembly 190 is illustrated. The assembly includes a busbar 100, a channel 110, a thermal barrier 150, and a hinge arrangement 160. The busbar 100 is movably attached to the battery pack 190 via the hinge arrangement 160. In some aspects, the hinge arrangement 160 is located at the top left of the battery pack 190 and is affixed to the top edge of the busbar 100. This hinge arrangement 160 allows the busbar 100 to pivot relative to the battery pack 190, facilitating the assembly and alignment of the thermal barrier 150 with the channel 110.

The channel 110 is shown as a recessed area along the length of the busbar 100. This channel 110 is designed to accommodate the thermal barrier 150, which is represented as a vertical element extending downward from the busbar 100 into the battery pack 190. The thermal barrier 150 is inserted into the channel 110 of the busbar 100, with its upper end fitting into the channel 110.

In some cases, when the busbar 100 is moved into place by pivoting by way of the hinge arrangement 160, the end of the thermal barrier 150 is received in the channel 110 on the busbar 100. This configuration allows for alignment and insertion of the thermal barrier 150 into the busbar 100 within the context of the battery pack 190. The flared second portion 114 of the channel 110 provides a larger target area for initial alignment of thermal barriers 150 during the assembly process, thereby enhancing the efficiency and reliability of the assembly process.

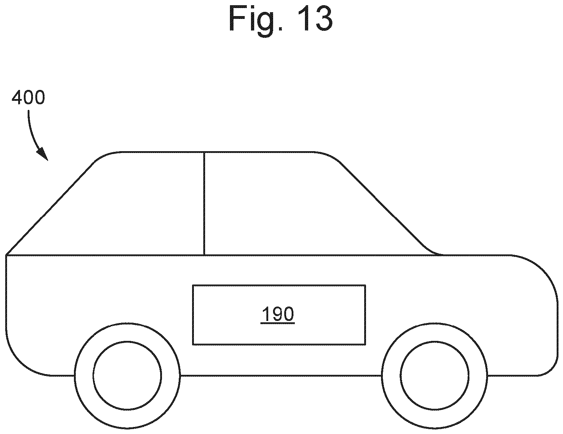

Referring to FIG. 13, a vehicle 400 incorporating a battery pack 190 as described herein is illustrated. The battery pack 190 is depicted as a rectangular component positioned in the lower central area of the vehicle 400, between the front and rear wheels. The battery pack 190 may be placed anywhere suitable within the vehicle 400, but in some cases, it may be situated in the floor or chassis area of the vehicle 400. The battery pack 190 may provide the power source for the traction of the vehicle 400, contributing to the vehicle's propulsion and overall performance.

In some aspects, the isolation cover 200 may be formed of a heat-resistant material. The heat-resistant material may be selected based on its ability to withstand high temperatures without degrading or losing its insulating properties. This may enhance the thermal management capabilities of the battery pack system, potentially enhancing its performance and lifespan. The isolation cover 200 may form upper and lower walls of a battery cell or cell group chamber respectively, with the sidewalls of the chamber being respective thermal barriers 150, and the ends of the chamber being a busbar 100 or integrated isolation cover 200.

In some cases, a battery pack system may include an insulating barrier positioned at the top and bottom of a series of battery cells 180. This insulating barrier may form upper and lower walls of a battery cell or cell group chamber respectively, with the sidewalls of the chamber being respective thermal barriers 150, and the ends of the chamber being a busbar 100 or integrated isolation cover 200. The insulating barrier may be made from a heat-resistant material, which may withstand high temperatures without degrading or losing its insulating properties. This may enhance the thermal management capabilities of the battery pack system, potentially enhancing its performance and lifespan.

In some embodiments, a thermal insulating barrier may be positioned between the battery cells 180 to provide thermal insulation and prevent thermal propagation across the cells. The thermal insulating barrier may be made from a heat-resistant material, which may withstand high temperatures without degrading or losing its insulating properties. This may enhance the thermal management capabilities of the battery pack system, potentially enhancing its performance and lifespan. The thermal insulating barrier may be positioned in such a way that it aligns with the channels 110 in the busbar 100 and the channels 210 in the isolation cover 200, ensuring proper alignment and location of the thermal barriers 150 during assembly.

The busbar and isolation cover with thermal barrier alignment guides described herein have industrial applicability in the manufacturing and assembly of battery packs, particularly for electric vehicles and other energy storage systems. The flared guide profiles incorporated into the channels of both the busbar and isolation cover facilitate more efficient and reliable assembly of battery pack components, potentially reducing production time and effort in industrial settings. This design is especially relevant to the automotive industry, where it can contribute to better thermal management and performance of electric vehicle battery systems. However, the concepts and techniques disclosed are not limited to automotive applications and may be adapted for use in various industries where precise alignment and thermal management of battery components are critical, such as in renewable energy storage systems, aerospace, and portable electronics manufacturing.

## Claims

1. A busbar (100) for a battery pack (190) having a plurality of battery cells (180) separated by respective thermal barriers (150), wherein:
the busbar (100) is configured to provide electrical connection between battery cells (180) within the battery pack (190) by way of electrical connection arrangements (185);
the busbar (100) further comprises a plurality of channels (110), each channel (110) configured to receive a thermal barrier (150); and
each channel (110) includes a first portion (112) sized to accommodate a thermal barrier (150) and a second portion (114) adjacent an opening of the channel (110) which is wider than the first portion (112) of the channel (110) such that, during assembly of the busbar (100) into a battery pack (190), the second portion (114) of each channel (110) is configured to guide a thermal barrier (150) into the respective channel (110).

2. The busbar (100) of claim 1, wherein the second portion (114) widens progressively with respect to the first portion (112).

3. The busbar (100) of claim 2, wherein the second portion (114) is flared with respect to the first portion (112).

4. The busbar (100) of claim 3, wherein the first (112) and second (114) portions of each channel (110) include sidewalls, the sidewalls of the second portion (114) being flared with respect to the first portion (112).

5. The busbar (100) of claim 1, wherein the busbar (100) comprises a body portion (122) and a plurality of fingers (120) extending away therefrom, and the channels (110) are provided on the fingers (120).

6. The busbar (100) of claim 2, wherein respective fingers (120) define openings therebetween, such that when the busbar (100) is assembled into a battery pack (190), additional thermal barriers (150) may pass through the openings between respective fingers (120) of the busbar (100).

7. The busbar (100) of claim 6, wherein the openings are u-shaped.

8. The busbar (100) of any of claims 1-7 wherein, when the busbar (100) is assembled into a battery pack (190), ends of thermal barriers (150) enter respective channels (110) in a direction substantially perpendicular to the major surface of the busbar (100).

9. The busbar (100) of any of claims 1-8, wherein the busbar (100) is slid onto ends of the thermal barriers (150).

10. The busbar (100) of any of claims 1-8, wherein the busbar (100) is affixed to, and hinged to enable movement with respect to the battery pack (190).

11. An isolation cover (200) for a battery pack (190) having a plurality of battery cells (180) separated by respective thermal barriers (150), wherein:
the isolation cover (200) is formed of an insulating material and is configured to insulate the battery cells (180) within the battery pack (190) and connections provided by a busbar (100);
the isolation cover (200) further comprises a plurality of channels (210), each channel (210) configured to receive a thermal barrier (150); and
each channel (210) includes a first portion (212) sized to accommodate a thermal barrier (150) and a second portion (214) adjacent an opening of the channel (210) which is wider than the first portion (212) of the channel (210) such that, during assembly of the isolation cover (200) into a battery pack (190), the second portion (214) of each channel (210) is configured to guide a thermal barrier (150) into the respective channel (210).

12. The isolation cover (200) of claim 11, wherein the second portion (214) widens progressively with respect to the first portion (212).

13. The isolation cover (200) of claim 12, wherein the second portion (214) is flared with respect to the first portion (212).

14. A battery pack (190) comprising at least one thermal barrier (150), the busbar (100) of claims 1-10, and the isolation cover (200) of claims 11-14.

15. A vehicle (400) comprising the battery pack (190) of claim 14.
